(19) Europäisches Patentamt
European Patent Office
Office européen des brevets

(11) Veröffentlichungsnummer: **0 614 953 A1**

# (12) EUROPÄISCHE PATENTANMELDUNG

(21) Anmeldenummer: **94103789.7**

(51) Int. Cl.$^5$: **C09D 11/10**

(22) Anmeldetag: **11.03.94**

(30) Priorität: **11.03.93 DE 4307776**

(43) Veröffentlichungstag der Anmeldung:
**14.09.94 Patentblatt 94/37**

(84) Benannte Vertragsstaaten:
**AT BE CH DE DK ES FR GB IT LI NL PT SE**

(71) Anmelder: **Zeller + Gmelin GmbH & Co**
**Schlossstrasse 20**
**D-73054 Eislingen (DE)**

(72) Erfinder: **Walter, Thomas, Dr.**
**Auchtweide 5/1**
**D-73035 Göppingen (DE)**
Erfinder: **Höllriegl, Hans, Dr.**
**Brunnenweilerstrasse 27**
**D-73035 Eislingen (DE)**
Erfinder: **Schweiger, Heinz, Dipl.-Ing.**
**Schillerstrasse 16**
**D-73079 Süssen (DE)**

(74) Vertreter: **Zumstein, Fritz, Dr. et al**
**Dr. F. Zumstein**
**Dipl.-Ing. F. Klingseisen**
**Bräuhausstrasse 4**
**D-80331 München (DE)**

## (54) UV-Flexodruckfarbe, Verfahren zu deren Herstellung und Verwendung.

(57) Es wird eine UV-härtende Flexodruckfarbe beschrieben, enhaltend auf das Gewicht bezogen:

a) 1 bis 30 % Pigment und/oder Farbstoffe,

b) als kationischen Photoinhibitor 1 bis 15 % Triarylsulfoniumsalze,

c) 0,5 bis 20 % einer polyhydroxyfunktionellen Komponente, bestehend aus einem hydroxyfunktionellen Silicon und Celluloseacetobutyrat,

d) bis zu 10 % Additive aus der Gruppe Wachse, Slipadditive, Entschäumer, Entlüfter, Verlaufsmittel, Netz- und Dispergiermittel sowie gegebenenfalls weitere Additive in der angegebenen Menge und

e) auf 100 % eine kationisch härtbare Komponente auf Basis von einem cycloaliphatischen Diepoxid und einem Homo- oder Copolymeren des Clycidyl(meth)acrylates sowie gegebenenfalls einem Reaktivverdünner auf Basis eines niedrigviskosen Expoxidharzes.

Gegenstand der Anmeldung ist ferner ein Verfahren zur Herstellung der genannten UV-Flexodruckfarbe, bei dem man die einzelnen Bestandteile der Farbe bis zur gleichmäßigen und vollständigen Verteilung miteinander vermischt.

Die Anmeldung richtet sich auch auf die Verwendung der genannten Farben für den Einsatz in Flexodruckmaschinen.

EP 0 614 953 A1

Gegenstand der Erfindung ist eine UV-Flexodruckfarbe sowie ein Verfahren zu deren Herstellung, wie in den Patentansprüchen definiert.

Zu Beginn dieses Jahrhunderts wurde der Flexodruck unter der Bezeichnung Anilin-Druck eingeführt und fand insbesondere in den U.S.A. schnelle Verbreitung. Bei diesem Druckverfahren handelt es sich um einen Rotationsdruck, bei dem nicht nur gute chemische und mechanische Eigenschaften der Druckfarbe sondern auch eine hohe Härtungsgeschwindigkeit des Bindemittels für die Erzielung hoher Druckgeschwindigkeiten notwendig sind.

Das Flexodruckverfahren ist heute hinsichtlich Kosten und Qualität ein starker Konkurrent zu den übrigen Druckverfahren und zeigt immer noch ein kräftiges Wachstum.

Die für den Flexodruck verwendeten lösemittelhaltigen Farben waren anfangs von minderer Qualität, wurden aber mit zunehmender Verbreitung des Flexodruckes bis auf den heutigen Standard stetig verbessert.

Lösemittelhaltige Flexodruckfarben bestehen allgemein aus farbgebenden Substanzen, nämlich unlöslichen Pigmenten oder löslichen Farbstoffen, Bindemitteln, Additiven und Lösemittel.

Die Auswahl von Binde- und Lösemittel beeinflußt den Transport der Farbe im Farbwerk, die Viskosität, die Trocknungsgeschwindigkeit, die Farbstärke, die Fließfähigkeit und die Haftung der Farbe auf dem Bedruckstoff.

Als Bindemittel kommen Cellulosederivate, Polyamidharze, Vinylpolymerisate sowie untergeordnet auch Polyester, Polyurethane, Ketonharze oder Maleinate einzeln oder kombiniert zum Einsatz. Diese Hauptbindemittel müssen gegebenenfalls noch mit Weichharzen oder Weichmachern flexibilisiert werden.

Additive sorgen für spezielle Eigenschaften der Farbe wie einen hohen oder niedrigen Reibungskoeffizienten, Scheuerfestigkeit usw.

Als Lösemittel werden hauptsächlich Kohlenwasserstoffe, Alkohole, Glykolderivate, Ester und Ketone verwendet.

Infolge des hohen Gehaltes an Lösemitteln weisen solche Flexodruckfarben erhebliche gesundheitliche, technische und umweltbelastende Nachteile auf. So verdampfen die enthaltenen Lösemittel bereits bei Raumtemperatur in zum Teil erheblichem Ausmaß. Dies kann zu gesundheitlichen Beeinträchtigungen des Druckpersonals führen. Da die verwendeten Lösemittel ferner eine teilweise sehr niedrige Zündtemperatur besitzen, müssen die Druckmaschinen exgeschützt ausgerüstet sein. Infolge stetiger Verdunstung des Lösemittels während des Druckprozesses ändert sich kontinuierlich die Viskosität der Farbe und damit die Farbstärke und das gesamte Druckergebnis. Das verdunstete Lösemittel wird durch den Drucker von Zeit zu Zeit durch Zugabe von weiterem Lösemittel ausgeglichen. Hierdurch werden zusätzliche Lösemittelmengen verdampft, wobei aber das Druckergebnis immer noch schwankt.

Die Abgabe von Lösemitteln belastet darüberhinaus die Umwelt und ist in Deutschland in der Verwaltungsvorschrift "Technische Anleitung zur Reinhaltung der Luft" ("TA-Luft") im Rahmen des "Bundes-Immissionsschutzgesetzes" ("BImSch-Gesetz") geregelt. Nach der "Vierten Verordnung zur Durchführung des BImSch-Gesetzes" fällt das Betreiben von Rotationsdruckmaschinen und damit auch jeder Flexodruckmaschine unter dieses Gesetz. Dies bedeutet, daß die zulässigen Höchstmengen an Lösemittel, die an die Umwelt abgegeben werden dürfen, vom Gesetzgeber vorgeschrieben und begrenzt sind.

Der Einsatz lösemittelhaltiger Flexodruckfarben bedingt daher zwingend die Rückgewinnung oder die Nachverbrennung der abgedampften Lösemittel. Beide Verfahren sind technisch aufwendig und mit hohen Investitions- und Betriebskosten verbunden. Die Nachverbrennung produziert erhebliche Mengen an Kohlendioxid, das anerkanntermaßen Hauptverursacher des globalen Treibhauseffektes ist.

Auch die ebenfalls bekannten wasserbasierenden Flexodruckfarben bestehen aus Farbmitteln, Bindemitteln und Additiven neben Wasser und im Regelfall gewissen Mengen Lösemittel. Der Anteil an Lösemittel ist hierbei für eine schnelle Trocknung und gute Filmbildung notwendig. Die Pigmente und Additive sind im Prinzip denen lösemittelhaltiger Druckfarben vergleichbar. Spezielle Zusätze verhindern das Schäumen der wäßrigen Druckfarbe. Als Bindemittel werden saure Maleinat-, Polyester- und Acrylharze verwendet. Diese Harze werden durch Verseifung ihrer Carboxylgruppen mit wäßrigem Ammoniak oder mit Aminen in wasserlösliche Salze überführt.

Ebenso wie die lösemittelbasierenden Flexodruckfarben weisen auch die wasserbasierenden verarbeitungstechnische und die Umwelt belastende Nachteile auf. So entweichen beim Trocknen des Farbfilms die zur Verseifung eingesetzten Amine oder das Ammoniak in die Umgebungsluft. Diese freigesetzten Verbindungen sind nicht nur geruchsbelästigend sondern auch gesundheitsschädlich. Die trockenen Druckfarbenfilme sind beispielsweise gegenüber Lösemittel oder Alkali nicht sehr beständig. Das Benetzungsverhalten auf nicht saugenden Untergründen wie z.B. Folien oder Metallen ist schlecht. Daher ist die Haftung des Druckfarbenfilms auf diesen Substraten nur in eingeschränktem Maße gegeben. Bei der Verarbeitung von wäßrigen Druckfarben muß beachtet werden, daß bei längeren Maschinenstillstandszeiten die Farbe leicht

auf Rasterwalze und Klischee eintrocknet und unlöslich wird, was einen erheblichen Reinigungsaufwand zur Folge hat. Wasserbasierende Farben sind ferner frost-
empfindlich und dürfen nicht unter 0 ° C gelagert werden. Auch die Abluftbestimmungen der TA-Luft können bei Verwendung wasserbasierender Farben infolge des, wenn auch geringen, Lösemittelanteils nicht immer eingehalten werden.

Eine weitere Entwicklung der Druckfarben richtet sich auf solche mit UV-härtbaren Bindemittelsystemen, die von dem allgemein bekannten Prinzip der UV-Härtung Gebrauch machen.

Die UV-Druckfarben enthalten farbgebende Substanzen und Additive neben Photoinitiatoren, die bei UV-Bestrahlung eine Polymerisation der ebenfalls enthaltenen Bindemittelkomponente auflösen. Als Bindemittel kommen bei diesem Druckfarbentyp Materialien zum Einsatz, die durch eine derart ausgelöste Polymerisation härten. Lösemittel oder Wasser sind in UV-Farben nicht enthalten. Technische, gesundheitliche oder umweltrelevante Nachteile und Probleme, die durch Lösemittel oder Wasser in Druckfarben bedingt sind, treten bei UV-Druckfarben nicht auf.

Derartige auch in Druckfarben zur Anwendung gelangte UV-Systeme können nach einen radikalischen oder einem kationischen Mechanismus polymerisieren.

Bei der radikalischen Polymerisation kommen vorwiegend Acrylate als Bindemittel zum Einsatz. Bei Acrylaten steht eine breite Rohstoffpalette zur Verfügung, so daß gehärtete Farbfilme mit den unterschiedlichsten Eigenschaften erhalten werden können. Ein weiterer Vorteil von Acrylaten besteht in ihrer im Regelfall hohen Reaktivität, weswegen Systeme mit hoher Verarbeitungsgeschwindigkeitformuliert werden können.

Nachteilig bei Acrylaten ist, daß sie - auch infolge ihrer hohen Reaktivität - auf problematischen Untergründen wie z.B. Kunststoffolien oder Metallen häufig schlecht haften. Eine gute Haftung auf solchen Untergründen ist jedoch für eine Anwendung bei Druckfarben, z.B. im Verpackungsdruck, unverzichtbar. Ein weiterer Nachteil von Acrylatsystemen besteht darin, daß selbst eine optimal formulierte UV-Farbe unter UV-Bestrahlung nicht zu 100 % vernetzt werden kann, d.h., auch unter optimalen Bedingungen lassen sich in einer aus Acrylaten als Bindemittel bestehenden UV-Farbe nach der Härtung nicht reagierte Bestandteile nachweisen. Da die in der UV-Härtung eingesetzten Acrylate und damit auch die nicht-vernetzten Anteile in der gehärteten UV-Farbe bestenfalls als sensibilisierend eingestuft werden, ist ihr Einsatz zumindest bei Farben für Lebensmittelverpackungen nach dem Bedarfsgegenstände-Gesetz eingeschränkt.

Bei kationisch polymerisierenden UV-Systemen wird die Vernetzungsreaktion durch bei der UV-Bestrahlung des Photoinitiators freigesetzte Säure katalysiert. Diese Säure ist im Gegensatz zu den kurzlebigen Radikalen, die bei der UV-Bestrahlung der in Acrylatsystemen verwendeten Photoinitiatoren entstehen, stabil und auch dann noch aktiv, wenn das kationische System die UV-Lampe passiert hat. Dies führt zu einer sogenannten "Dunkelreaktion" oder Nachhärtung, bei der ein kationisches System nach der Bestrahlung weitervernetzt und vollständig abreagiert. In ein derartiges System enthaltenden UV-Druckfarben können somit nach einer gewissen Zeit keine nicht-reagierten Bestandteile mehr nachgewiesen werden, was vor allem für Anwendungen bei Lebensmittelverpackungen wichtig ist.

Kationisch härtende UV-Systeme werden in der Patentliteratur beschrieben. So erwähnt die US-PS 4,058,401 die kationische UV-Härtung von Epoxyverbindungen mit Oniumsalzen von Elementen der Gruppe VIa als Photoinitiatoren und die US-PS 4,069,055 diejenige mit Oniumsalzen von Elementen der Gruppe Va.

Darüberhinaus wird in der US-PS 3,708,296 die kationische UV-Härtung von Epoxyverbindungen unter Verwendung von Aryldiazonium-Verbindungen als Photoinitiatoren zur Herstellung von Beschichtungen beschrieben.

Der US-PS 4,090,936 sind Materialien zur Herstellung von Photoresists mittels kationischer UV-Härtung zu entnehmen, die neben Epoxyverbindungen und Triarylsulfoniumsalzen inerte oder auch Hydroxylgruppen haltige Polymere enthalten.

Für UV-Systeme, die nach einem kationischen Mechanismus polymerisieren, ist die derzeit zur Verfügung stehende Rohstoffpalette weit weniger umfangreich als bei den radikalisch härtenden Acrylaten. Als Rohstoffe für ein kationisches System kommen, wie auch die vorstehenden US-Patentschriften zeigen, hauptsächlich Epoxide, seit kurzem aber auch Vinylether oder Vinylester in Betracht. Vinylether und -ester zeigen zwar eine hohe Reaktivität, besitzen jedoch eine schlechte Haftung auf Kunststoffolien und auf Metallen und weisen nach der Härtung einen noch deutlich wahrnehmbaren Geruch auf.

Aus der US-PS 3,968,056 wurden leitfähig beschichtete Glaskügelchen zur Herstellung von leitfähigen Druckfarben für gedruckte Schaltkreise bekannt, die UV-gehärtet werden. Es werden sowohl radikalisch härtende als auch kationische Systeme in einem großen Viskositätsbereich bis hin zu pastösen Farben beschrieben. Als Photoinitiatoren für die kationische Härtung kommen Triarylsulfoniumsalze zum Einsatz.

Nach der EP-A-432 093 werden chemisch modifizierte Epoxyverbindungen und Triarylsulfoniumsalze für die Herstellung von hochviskosen, kationisch härtbaren UV-Wertdruckfarben verwendet.

Kationisch härtende UV-Druckfarben auf Basis von Epoxiden zeichnen sich zwar im allgemeinen durch eine gute Haftung auf den verschiedensten Untergründen aus, besitzen jedoch den Nachteil einer vergleichsweise geringen Reaktivität, die bisher ihren Einsatz in schnellaufenden Flexodruckmaschinen mit zufriedenstellenden Ergebnissen nicht ermöglichte.

Aufgabe der Erfindung war es daher, eine kationisch härtende UV-Flexodruckfarbe zu entwickeln, die die Vorteile von kationisch härtenden Epoxidsystemen, wie eine gute Haftung auf Kunststoffolien und Metall, insbesondere Aluminium, sowie die Abwesenheit einer Inhibierung durch Luftsauerstoff (wie bei radikalischen Systemen) mit einer hohen Härtungsgeschwindigkeit vereinigt, welche die Verarbeitung in Flexodruckmaschinen bei Bahngeschwindigkeiten bis zu 200 m/min, in Extremfällen bis zu 300 m/min, erlaubt. Hierbei sollen mechanische Probleme wie ein Ablegen der Farbe auf dem Klischee des folgenden Farbwerkes bzw. auf Umlenkwalzen vermieden werden. Ferner sollen die Farben im Mehrfarbendruck unter Erzielung einer guten Haftung der verschiedenen Farbschichten aufeinander druckbar sein. Weitere Erfordernisse sind Flexibilität, Abriebfestigkeit und Beständigkeit insbesondere gegenüber Füllgütern von Lebensmittelverpackungen und gegenüber Lösemitteln sowie Heißsiegelfähigkeit.

Durch Auswahl, Optimierung und Abstimmung der einzelnen Komponenten, sowohl bestandteilmäßig als auch mengenmäßig, ist es nun der Anmelderin gelungen, eine UV-Flexodruckfarbe zu entwickeln, die dem vorstehenden Anforderungsprofil genügt.

Gegenstand der Erfindung ist somit eine UV-härtende Flexodruckfarbe, enthaltend auf das Gewicht bezogen:

a) 1 bis 30 % Pigment und/oder Farbstoffe,

b) als kationischen Photoinitiator 1 bis 15 % Triarylsulfoniumsalze,

c) 0,5 bis 20 % einer polyhydroxyfunktionellen Komponente, bestehend aus einem hydroxyfunktionellen Siliconharz und Celluloseacetobutyrat,

d) bis zu 10 % Additive aus der Gruppe Wachse, Slipadditive, Entschäumer, Entlüfter, Verlaufsmittel, Netz- und Dispergiermittel sowie gegebenenfalls weitere Additive in der angegebenen Menge und

e) auf 100 % eine kationisch härtbare Komponente auf Basis von einem cycloaliphatischen Diepoxid und einem Homo- oder Copolymeren des Glycidyl(meth)acrylats sowie gegebenenfalls einem Reaktivverdünner auf Basis eines niedrigviskosen Epoxidharzes.

Im folgenden werden die Komponenten der erfindungsgemäßen Druckfarbe näher erläutert.

Komponente a):

Bei den erfindungsgemäß zum Einsatz gelangenden Pigmenten handelt es sich um organische und anorganische Pigmente. Ebenso können lösliche Farbstoffe zum Einsatz gelangen. Diese Pigmente und Farbstoffe unterscheiden sich nicht grundsätzlich von solchen, die in bekannten lösemittelhaltigen oder wasserbasierenden Flexodruckfarben eingesetzt werden, und werden daher nicht im Detail beschrieben.

Die Pigmente und/oder Farbstoffe liegen in der erfindungsgemäßen Druckfarbe vorzugsweise in einer Menge von 5 bis 30, bevorzugter 10 bis 20, und insbesondere 7 bis 16 Gew.-%, vor.

Komponente b):

Als Photoinitiatoren für die erfindungsgemäße Druckfarbe kommen alle Substanzen in Frage, die bei UV-Bestrahlung Lewissäuren oder Brönstedsäuren freisetzen. Eine bevorzugte Form von erfindungsgemäß verwendbaren Photoinitiatoren sind Triarylsulfoniumsalze mit der allgemeinen Strukturformel $Ar_3S^+ [MX_n]^-$, worin Ar ein einwertiger aromatischer Rest, insbesondere Phenyl, M ein Metall oder Halbmetall, insbesondere P oder Sb, X ein Halogen, insbesondere Fluor, und n eine Zahl von 0 bis 8 entsprechend den Wertigkeiten von M und X sind. Bevorzugte Photoinitiatoren sind Triarylsulfoniumsalze, bei denen in dem Anion $[MX_n]^-$ M = P oder Sb, X = F und n = 6 sind.

Für die erfindungsgemäße Druckfarbe geeignete Photoinitiatoren sind general aus dem Stand der Technik bekannt und werden beispielsweise in der erwähnten US-PS 4,058,401 beschrieben.

Sie sind weiterhin im Handel erhältlich. Beispiele für geeignete Handelsprodukte sind Cyracure UVI 6974 (M = Sb) und Cyracure UVI 6990 (M = P), jeweils der Firma Union Carbide, FX 512 (M = P) der Firma 3M sowie KI 85 (M = P) und KI 85 B (M = P), jeweils der Firma Degussa.

Im einzelnen handelt es sich bei Cyracure UVI 6974 um eine Mischung aus 50 % Triphenylsulfoniumhexafluoroantimonat und 50 % Propylencarbonat; bei Cyracure UVI 6990 um eine Mischung aus 50 % Triphenylsulfoniumhexafluorophosphat und 50 % Propylencarbonat; bei FX 512 um eine Mischung aus 20 bis 45 % Triphenylsulfoniumhexafluorophosphat, 40 % 2-(3H)-Dihydrofuranon, wobei der Rest aromatische Sulfoniumnebenprodukte sind; bei KI 85 um eine Mischung aus 33 % Triphenylsulfoniumhexafluorophosphat und 67 % Propylencarbonat; und bei KI 85 B um eine Mischung aus 55 % Triphenylsulfoniumhexafluorophosphat und 45 % $\gamma$-Butyrolacton.

Ersichtlicherweise sind die kationischen Photoinitiatoren im Handel zumeist in Kombination mit Verdünnern wie Propylencarbonat, 2-(3H)-Dihydrofuranon und $\gamma$-Butyrolacton erhältlich. Die Mengen dieser Verdünner bewegen sich im allgemeinen im Bereich der Mengen, wie sie für die vorstehenden Handelsprodukte angegeben wurden.

Die Menge der Photoinitiatoren in der erfindungsgemäßen Druckfarbe beträgt vorzugsweise 2 bis 12,5 Gew.-%.

Komponente c):

Es handelt sich bei dieser um eine für sich selbst nicht-kationisch polymerisierbare Komponente, die aber in Verbindung mit der kationisch polymerisierbaren bzw. härtbaren Komponente (Komponente e)) an der Polymerisation teilnimmt. Zusammen mit der Komponente e) bildet sie das Bindemittel.

Bei dem hydroxyfunktionellen Silicon der Komponente c) kann es sich insbesondere um hydroxylgruppenhaltige Polysiloxanverbindungen der allgemeinen Formel $HO-[R_2Si-O]_n-H$ oder

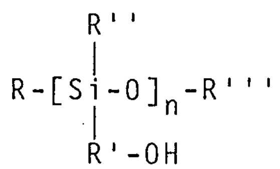

oder

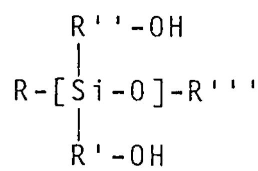

worin R und R''' einen bei derartigen Verbindungen üblichen organischen Rest, insbesondere einen aliphatischen oder aromatischen Kohlenwasserstoffrest oder Wasserstoff bedeuten, und R' und R'' einen bei derartigen Verbindungen üblichen organischen Rest, insbesondere einen aliphatischen oder aromatischen Kohlenwasserstoffrest bedeuten, wobei R' und R'' in letzterer Formel identisch sein können. In den vorstehenden Formeln besitzt der Index n einen bei derartigen Verbindungen üblichen Wert und beträgt insbesondere $\geqq 3$.

Derartige hydroxyfunktionelle Silicone sind bekannt und im Handel erhältlich. Ein Beispiel für ein derartiges Handelsprodukt ist DOW Corning Z-6018, bei dem es sich um ein lösemittelfreies hydroxyfunktionelles Siliconharz handelt.

Die hydroxyfunktionellen Silicone bzw. Siliconharze sind in der erfindungsgemäßen Druckfarbe vorzugsweise in einer Menge von 1 bis 10 Gew.-%, zweckmäßig bis zu 5 Gew.-%, und besonders bevorzugt in einer Menge von 2 bis 4 Gew.-%, vorhanden.

Bei dem Celluloseacetobutyrat handelt es sich um ein polyhydroxyfunktionelles Cellulosederivat, das beispielsweise unter der Bezeichnung CAB 551.001 von der Firma Krahn Chemie im Handel erhältlich ist. Ebenso wie das hydroxyfunktionelle Silicon trägt dieser Bestandteil zu einer Reaktivitätserhöhung der kationisch härtbaren Komponente bei.

Die Menge des Celluloseacetobutyrats in der erfindungsgemäßen Druckfarbe beträgt vorzugsweise 0,5 bis 3 Gew.-%, zweckmäßig 0,5 bis 1,5 Gew.-%, und insbesondere etwa 1 Gew.-%.

Komponente d):

Als Additive kommen allgemein Wachse, Slipadditive, Netz- und Dispergierhilfsmittel, Entschäumer, Entlüfter, Verlaufsmittel, Haftvermittler, Antiabsetzmittel, rheologische Additive, Photosensibilisatoren, Stabilisatoren und Kratzfestmittel in Frage. Diese Additive unterscheiden sich nicht grundlegend von solchen, die in bekannten lösemittelhaltigen oder wasserbasierenden Flexodruckfarben zum Einsatz gelangen und werden daher - von einigen speziellen Vertretern abgesehen - vorliegend nicht im Detail beschrieben. Allerdings sollte die Auswahl der Additive für die erfindungsgemäße Druckfarbe so vorgenommen werden, daß sie im Übereinanderdruck der Farben im Mehrfarbendruck keine Benetzungs-, Verlaufs- oder Haftstörungen hervorrufen. Derartige Abstimmungen können jedoch vom Fachmann ohne nennenswerte Schwierigkeiten vorgenommen werden.

Beispiele für spezielle Additive und ihre Einsatzmengen sind wie folgt:

| | |
|---|---|
| Byk 358 | : Verlaufsmittel; Einsatzmenge ca. 0,4 Gew.-%; enthält 50 % Lösemittel (Alkylbenzole) |

| | |
|---|---|
| Dow Corning PA 57 | : Verlaufsmittel; Einsatzmenge ca. 0,5 Gew.-%; lösemittelfrei |
| Byk P 105 | : Netz- und Dispergieradditiv; Einsatzmenge bis ca. 0,3 Gew.-%; lösemittelfrei |
| Disperbyk 161 | : Netz- und Dispergieradditiv; Einsatzmenge bis ca. 2 Gew.-% bei schwer zu dispergierenden Pigmenten; enthält 70 % Lösemittel (Methoxypropylacetat/Butylacetat 6:1) |
| Shamrock S 394 N1 | : PE-Wachs; Einsatzmenge ca. 1,5 Gew.-% |
| Forbest PAM | : (Lucas Meyer GmbH); Polyamidwachs; Einsatzmenge ca. 1,5 Gew.-% |
| Shamrock SST-3 | : PTFE-Wachs; Einsatzmenge ca. 1,5 |

Die bevorzugte Menge der Additive in der erfindungsgemäßen Druckfarbe beträgt 0,1 bis 8 Gew.-%, insbesondere 1,5 bis 4 Gew.-%.

Komponente e):

Bei der kationisch härtbaren Komponente handelt es sich um monomere, oligomere und polymere Materialien, die ein oder mehrere Epoxid- oder Oxirangruppierungen enthalten.

Beispiele für das cycloaliphatische Diepoxid sind hierbei Cyracure UVR 6105 der Firma Union Carbide und K 126 der Firma Degussa, deren cycloaliphatischer Diepoxidbestandteil das 3,4-Epoxycylohexylmethyl-3',4'-epoxycyclohexancarboxylat ist, sowie Cyracure UVR 6110 der Firma Union Carbide, welches neben dem genannten cycloaliphatischen Diepoxid noch ca. 5 % Dimere und Trimere dieses Moleküls aufweist.

Bei dem Reaktivverdünner der Komponente e) handelt es sich um einen ebenfalls an der kationischen Polymerisation teilnehmenden Bestandteil auf Basis eines niedrigviskosen Epoxyharzes. Mit dem Reaktivverdünner läßt sich die Viskosität der Druckfarbe erniedrigen. Beispiele für diesen Bestandteil sind kommerziell erhältliche niedrigviskose Epoxyharze, z.B. Harze der Serie Araldit ® der Firma Ciba-Geigy, der Serie D.E.R. oder Derakane der Firma Dow Chemical, der Serie Epon ® der Firma Shell, der Serie Grilonit der Firma Ems-Chemie, der Serie Rütapox der Firma Rütgers-Werke, der Serie Eurepox der Firma Schering, sowie epoxidierte Novolake.

Spezielle Vertreter der erfindungsgemäß einsetzbaren Reaktivverdünner sind:

| | |
|---|---|
| Grilonit RV 1802 | : p-tert.-Butylphenylglycidylether (EMS-Chemie), |
| Grilonit RV 1812 | : Hexandioldiglycidylether (EMS-Chemie) |
| Grilonit RV 1814 | : $C_{13}$/$C_{15}$-Alkylglycidylether (EMS-Chemie) und |
| Rütapox Z | : $C_{12}$/$C_{14}$-Alkylglycidylether (Bakelite) |

Die Menge des cycloaliphatischen Diepoxids in der erfindungsgemäßen Druckfarbe beträgt vorzugsweise 30 bis 70 Gew.-%, besonders bevorzugt 45 bis 55 Gew.-%. Die Menge des Homo- oder Copolymerisats des Glycidyl(meth)acrylats in der erfindungsgemäßen Druckfarbe beträgt vorzugsweise 1 bis 10 Gew.-%, besonders bevorzugt 2 bis 6 Gew.-%. Die Menge des Reaktivverdünners in der erfindungsgemäßen Druckfarbe beträgt vorzugsweise 5 bis 30 Gew.-%, besonders bevorzugt 15 bis 25 Gew.-%.

Im Hinblick auf die Zusammensetzung der erfindungsgemäßen Druckfarbe sei noch bemerkt, daß einzelne zu deren Herstellung verwendete Komponenten produktionsbedingt noch Lösungsmittelanteile aufweisen können. Im Hinblick auf die vorbekannten lösemittelhaltigen Druckfarben, die Lösemittel in ganz anderer Größenordnung enthalten, sind die vorliegenden Druckfarben dennoch als "lösemittelfrei" einzuordnen.

Gegenstand der Erfindung ist ferner ein Verfahren zur Herstellung einer UV-Flexodruckfarbe, wie vorstehend definiert, das dadurch gekennzeichnet ist, daß man die einzelnen Bestandteile der Farbe bis zur gleichmäßigen und vollständigen Verteilung miteinander vermischt.

In der Praxis geht man hierbei vorzugsweise so vor, daß man zuerst eine Pigmentpaste herstellt. Die Pigmentpaste enthält einen Teil der kationisch härtbaren Komponente(n), gegebenenfalls einen Teil oder die gesamte Menge der polyhydroxyfunktionellen Komponente und gegebenenfalls ein Dispergierhilfsmittel und andere Additive. Diese Komponenten werden gemischt und/oder ineinander gelöst. Vorzugsweise verwendet man hierzu einen Dissolver. Hierzu gibt man das Pigment, das vordispergiert wird. Die erhaltene vordispergierte Paste wird dann auf die nötige Kornfeinheit verrieben. Zweckmäßig kann man hierfür eine Perlmühle einsetzen. Zur Herstellung der fertigen Flexodruckfarbe werden zu der Pigmentpaste die übrigen Bestandteile der Farbe zugegeben und gemischt, bis alle Komponenten gleichmäßig und vollständig verteilt sind. Bei Einsatz eines Wachses als Additiv zur Erhöhung der Abriebfestigkeit kann auch mit diesem Wachs eine Paste hergestellt werden, die entsprechend in die Farbe eingearbeitet wird.

Mit der erfindungsgemäßen UV-Flexodruckfarbe ist es möglich, auf allen gängigen Flexodruckmaschinen, insbesondere auch auf den sogenannten Zentralzylinder- und Ständermaschinen aber auch auf Etikettendruckmaschinen, Zeitungsdruckmaschinen oder anderen, die mit einer oder mehreren UV-Trocknungseinheit(en) pro Farbwerk ausgerüstet sind, zu drucken.

Als Substrate kommen alle gängigen Substrate wie z.B. Papier, Karton, Wellpappe, Folien aus Kunststoff wie Polyethylen (LDPE, LLDPE, HDPE), Polypropylen (PP, oPP, BoPP), Polyester, PVC, Polystyrol, Zellglas und andere oder Metalle (beschichtet oder unbeschichtet) wie insbesondere Aluminium in Frage.

Die vorliegenden Farben können bei Bahngeschwindigkeiten von vorzugsweise bis zu 200 m/min mit einem UV-Strahler pro Farbwerk gehärtet werden. Der Strahler soll hierzu mindestens eine Leistung von vorzugsweise 100 Watt/cm aufweisen. Werden mehrere Strahler pro Farbwerk mit dieser Energie eingesetzt, können auch höhere Bahngeschwindigkeiten erreicht werden.

Die erfindungsgemäßen Flexodruckfarben besitzen in Abhängigkeit von der Bindemittelzusammensetzung und dem Pigment eine Viskosität, die vorzugsweise im Bereich von 400 bis 1200 mPa.s bei einem Schergefälle von 100•1/s liegt.

Die getrockneten Farben zeichnen sich durch sehr gute Haftung insbesondere auf Kunststoffolien und auf Aluminium aus. Sie sind im Mehrfarbendruck übereinander mit einer guten Haftung aufeinander druckbar. Sie besitzen gute Beständigkeiten gegenüber mechanischem Abrieb und gegenüber Chemikalien und Lösemitteln. Sie sind ferner heißsiegelfähig und geruchsfrei. Sie können bei allen Anwendungen des Flexodrucks verdruckt werden, wobei sie sich aufgrund ihrer Eigenschaften besonders für einen Einsatz im Verpackungs- und Etikettendruck eignen.

Die folgenden Ausführungsbeispiele sollen die erfindungsgemäßen Druckfarben näher erläutern.

## Beispiel 1

Gelbe UV-Flexofarbe

Herstellung der Pigmentpaste:

Im Labordissolver werden 200 g Cyracure UVR 6105 und 50 g Glycidylmethacrylatcopolymer vorgelegt. Hierin löst man 10 g Celluloseacetobutyrat. Hierzu gibt man 80 g Irgalithgelb BAW und rührt, bis das Pigment vollständig und gleichmäßig verteilt ist. Anschließend wird diese Mischung in einer Laborperlmühle in einem Durchgang auf die nötige Kornfeinheit verrieben.

Folgende Parameter gelten hierbei:

- Befüllung: Glaskugeln mit 1 mm Durchmesser
- Füllgrad: 90 %
- Drehzahl: 2000 U/min
- Durchsatz: 1,5 ml/sec
- Temperatur: 40 - 70 °C

Herstellung der Wachspaste:

Im Labordissolver legt man 85 g Cyracure UVR 6105 vor, gibt 15 g Wachs hinzu und rührt, bis das Wachs gleichmäßig und vollständig verteilt ist.

Herstellung der UV-Flexofarbe:

Die so hergestellten Pigment- und Wachspasten werden im Labordissolver vorgelegt. Hierzu gibt man 200 g Reaktivverdünner RV 1802, 226 g Cyracure UVR 6105, 20 g hydroxyfunktionelles Siliconharz Z-6018, 4 g Byk 358 und 110 g Cyracure UVI 6990 und rührt diese Mischung, bis alle Komponenten gleichmäßig und vollständig verteilt sind.
Diese Farbe hat bei 20 °C eine Viskosität von 670 mPa . s bei einem Schergefälle von 100 . 1/s (Platte-Kegel-Viskosimeter der Firma Physica).

**Beispiel 2**

Schwarze UV-Flexofarbe

Herstellung der Pigmentpaste:

Im Labordissolver legt man 265 g Cyracure UVR 6105, 30 g Polyglycidylmethacrylat und 1,5 g Byk P 105 vor und löst hierin 10 g Celluloseacetobutyrat. Hierzu gibt man 137,4 g Spezialschwarz 250, 8,8 g Irgalithrubin L4BF und 11,0 g Heliogenblau D 7084 DD und rührt, bis das Pigment vollständig und gleichmäßig verteilt ist.

Diese Mischung wird bei denselben Bedingungen, wie oben in der Perlmühle, verrieben.

Herstellung der Wachspaste:

Diese wird wie in Beispiel 1 hergestellt.

Herstellung der UV-Flexofarbe:

Die so hergestellten Pigment- und Wachspasten werden im Labordissolver vorgelegt. Hierzu gibt man 200 g Reaktivverdünner RV 1802, 87,3 g Cyracure UVR 6105, 20 g Z-6018, 4 g Byk 358 und 125 g Cyracure UVI 6990 und rührt diese Mischung, bis alle Komponenten gleichmäßig und vollständig verteilt sind.

Diese Farbe hat bei 20 ° C eine Viskosität von 750 mPa . s bei einem Schergefälle von 100 . 1/s (Platte-Kegel-Viskosimeter der Firma Physica).

**Beispiele 3 und 4**

Skalenfarben

Es wurden Druckfarben aus den in der nachstehenden Tabelle (die der Übersichtlichkeit halber auch die Bestandteile der vorangegangenen Beispiele 1 und 2 enthält) angegebenen Bestandteilen hergestellt, wobei die angegebenen Mengen sich auf Gewichtsprozent beziehen. Zur Herstellung der Druckfarbe kann wie vorstehend beschrieben der Pigmentanteil als Paste zugegeben werden.

Tabelle

| Beispiel | 3<br>yellow | 2<br>black | 3<br>blue | 4<br>magenta |
|---|---|---|---|---|
| Cyracure UVR 6105 | 51,1 | 43,73 | 49,8 | 48,3 |
| Cyracure UVI 6990 | 11 | 12,5 | 11 | 11 |
| Grilonit RV 1802 | 20 | 20 | - | - |
| Rütapox Z | - | - | 20 | 20 |
| Polyglycidylmethy-acrylat | - | 3 | - | - |
| Glycidylmethacrylat-copolymer | 5 | - | 5 | 5 |
| hydroxyfunktionelles Siliconharz | 2 | 2 | 2 | 2 |
| Wachs | 1,5 | 1,5 | 1,5 | 1,5 |
| Verlaufmittel | 0,4 | 0,4 | 0,4 | 0,4 |
| Dispergieradditiv | - | 0,15 | - | - |
| Celluloseaceto-butyrat | 1 | 1 | 1 | 1 |
| Pigment * | 8 | 15,72 | 9,3 | 10,8 |

* Pigment in Ausführungsbeispiel:

3 = Irgalithgelb BAW (Ciba-Geigy)

4 = Heliogenblau D 7084 DD`(BASF)

5 = Irgalithrubin L4BF (Ciba-Geigy)

6 = Mischung aus: 13,74 Teilen Spezialschwarz 250 (Degussa)
0,88 " Irgalithrubin L4BF
1,1 " Heliogenblau D 7084 DD

Die in den vorangegangenen Beispielen beschriebenen Druckfarben wurden mit einem Probedruckgerät der Firma Prüfbau mit einer Schichtdicke von 1,5 $g/m^2$ auf Polyethylenfolie gedruckt und mit einer Quecksilber-Mitteldruck-UV-Röhre bei einer Leistung von 120 Watt/cm gehärtet (derartige UV-Röhren sind im Handel beispielsweise von den Firmen IST-Strahlentechnik und Fusion Systems erhältlich). Bei sämtlichen Druckfarben ließen sich Bahngeschwindigkeiten von 200 m/min erzielen.

**Patentansprüche**

1. UV-härtende Flexodruckfarbe, enthaltend auf das Gesamtgewicht bezogen:
   a) 1 bis 30 % Pigment und/oder Farbstoffe,
   b) als kationischen Photoinitiator 1 bis 15 % Triarylsulfoniumsalze,
   c) 0,5 bis 20 % einer polyhydroxyfunktionellen Komponente, bestehend aus einem hydroxyfunktionellen Silicon und Celluloseacetobutyrat,

d) bis zu 10 % Additive aus der Gruppe Wachse, Slipadditive, Entschäumer, Entlüfter, Verlaufsmittel, Netz- und Dispergiermittel sowie gegebenenfalls weitere Additive in der angegebenen Menge und

e) auf 100 % eine kationisch härtbare Komponente auf Basis von einem cycloaliphatischen Diepoxid und einem Homo- oder Copolymeren des Glycidyl(meth)acrylates sowie gegebenenfalls einem Reaktivverdünner auf Basis eines niedrigviskosen Expoxidharzes.

**2.** Druckfarbe gemäß Anspruch 1, dadurch gekennzeichnet, daß das hydroxyfunktionelle Silicon der Komponente c) in einer Menge von 1 bis 10, insbesondere 2 bis 4 Gew.-%, vorliegt.

**3.** Druckfarbe gemäß Anspruch 1 oder 2, dadurch gekennzeichnet, daß das Celluloseacetobutyrat der Komponente c) in einer Menge von 0,5 bis 3 %, insbesondere 0,5 bis 1,5 %, vorliegt.

**4.** Druckfarbe gemäß einem der Ansprüche 1 bis 3, dadurch gekennzeichnet, daß das cycloaliphatische Diepoxid der Komponente e) in einer Menge von 30 bis 70, insbesondere 40 - 55 Gew.-%, vorliegt.

**5.** Druckfarbe gemäß einem der Ansprüche 1 bis 4, dadurch gekennzeichnet, daß das Homo- oder Copolymerisat des Glycidyl(meth)acrylates der Komponente e) in einer Menge von 1 bis 10, insbesondere 2 bis 6 Gew.-% vorliegt.

**6.** Druckfarbe gemäß einem der Ansprüche 1 bis 5, dadurch gekennzeichnet, daß der Reaktivverdünner der Komponente e) in einer Menge von 5 bis 30, insbesondere 15 bis 25 Gew.-%, vorliegt.

**7.** Druckfarbe gemäß einem der Ansprüche 1 bis 6, dadurch gekennzeichnet, daß die Additive der Komponente d) in einer Menge von 0,1 bis 8 Gew.-% vorliegen.

**8.** Verfahren zur Herstellung einer UV-Flexodruckfarbe gemäß einem der Ansprüche 1 bis 6, dadurch gekennzeichnet, daß man die einzelnen Bestandteile der Farbe bis zur gleichmäßigen und vollständigen Verteilung miteinander vermischt.

**9.** Verwendung von Druckfarben gemäß einem der Ansprüche 1 bis 7 für den Einsatz in Flexodruckmaschinen.

Europäisches Patentamt

# EUROPÄISCHER RECHERCHENBERICHT

Nummer der Anmeldung
EP 94 10 3789

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | GB-A-2 219 591 (KANSAI PAINT)<br>* Seite 15, Zeile 11 - Zeile 14; Ansprüche 1,11,12 *<br>--- | 1 | C09D11/10 |
| A,D | EP-A-0 432 093 (SICPA HOLDING)<br>* Ansprüche 1-3; Beispiel 1 *<br>----- | 1 | |
| | | | RECHERCHIERTE SACHGEBIETE (Int.Cl.5) |
| | | | C09D |

Der vorliegende Recherchenbericht wurde für alle Patentansprüche erstellt

| Recherchenort | Abschlußdatum der Recherche | Prüfer |
|---|---|---|
| DEN HAAG | 9. Juni 1994 | Beyss, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)